# EUROPEAN PATENT SPECIFICATION

(11) **EP 3 774 494 B1**
(45) Date of publication and mention of the grant of the patent: **25.09.2024**
(21) Application number: 19719177.8
(22) Date of filing: 09.04.2019
(51) Int. Cl.: B62B 5/00, B62B 3/10

(54) **GOLF TROLLEY**
GOLFWAGEN
CHARIOT DE GOLF

(30) Priority: 13.04.2018 CH 4752018
(43) Date of publication of application: 17.02.2021
(73) Proprietor: Evotec-Swiss AG, 6331 Hünenberg (CH)
(72) Inventor: HESS, Christian, 8107 Buchs (CH)
(74) Representative: Rentsch Partner AG
(86) International application number: PCT/EP2019/058988
(87) International publication number: WO 2019/197421

(56) References cited:
- DE-A1- 102006 057 156
- DE-A1- 102013 013 339
- FR-A1- 3 052 733
- US-A1- 2004 238 241
- US-A1- 2012 118 657

## Description

### FIELD OF THE INVENTION

The present invention is directed to a golf trolley as well as to a coupling assembly for attaching a golf bag to a golf trolley. The present invention is further directed to a golf trolley assembly comprising a golf trolley and a coupling assembly.

### BACKGROUND OF THE INVENTION

WO2017008813A1 was published on 19 January 2017 on behalf of Carryon Golf trolley APS and discloses a golf trolley which is telescopic collapsible in more than one direction. The golf trolley shown in this application comprises a substantially cylindrical central part and two side wheels arranged on respective side wheel axles, whereby the side wheel axles can be telescopically inserted into ends of the central part. As well, the golf trolley comprises a bottom frame having multiple telescopic parts that extend in the forward driving direction of the golf trolley to a single nose wheel.

US9260124B1 was published on 16 February 2016 on behalf of Hyungsung Corporation, and discloses a folding golf cart. The golf cart comprises a front frame having a bag bottom carrier and two rear wheel frames connected to the front frame via connecting bars. The document discloses that rear wheels may comprise in-wheel motors in order to drive the golf cart. As well, the golf cart comprises vertical pivot frames installed to the rear wheel frames so as to be pivotable upward and toward a front wheel. In order to attach a bag, a bag support frame is connected to the vertical pivot frames via pillars. The bag support frame has a bag support member and a pull handle. In addition, a longitudinal prop is installed between the front frame and the bag support frame and a transverse prop is installed between the rear wheel frames. Such a type of a golf cart is relatively heavy and has a relatively poor direction stability when used on uneven terrain. As well, it has relatively large dimensions when in a folded state such that transport in the trunk of a small car or a sports car is hardly possible.

US9764754B2 was published on 19 September 2017 on behalf of Ningbo Wentai Sport Equipment Co., Ltd. and discloses a golf push cart. The push cart comprises a frame, a rear wheel assembly comprising two wheels and a front wheel assembly comprising one wheel as well as a connection rod linkage. The frame includes an upper frame and a lower frame. The upper frame is disposed on the lower frame. The rear wheel assembly is movably disposed on the lower frame or the upper frame. The front wheel assembly is disposed on the lower frame. The frame is connected to the rear wheel assembly via the connection rod linkage. A rotation of the upper frame or the lower frame drives the connection rod linkage to flatten the rear wheel assembly with the upper frame or the lower frame, or to unfold the rear wheel assembly. Such a type of golf push cart as well has a relatively poor direction stability and in addition also relatively large dimensions when in a collapsed state due to the arrangement of the wheels.

US 2004/238241 A1 was published on 2. December 2004 on behalf of Mitchell Lawrence Carhart and discloses a front-wheel motor powered golf trolley comprised of a compact backward tricycle-wheel arrangement and a lightweight stiff open truss chassis. Left and right front wheel assemblies, driven by common drive axle, motorized through silent motor speed reduction, pull the trolley in an easily guided walk-along fashion. The driven front wheels are compliantly isolated from the chassis by sprung front axle support arms. Trolley stance stabilization and steering are by an independently sprung rear wheel/pivot assembly, the pivot being located between the front drive and rear wheel axles. A steering handle is the user-guiding interface and location for all hand operated controls. Upper and lower golf bag supports fold out from the chassis.

### SUMMARY OF THE INVENTION

The vast majority of conventional golf trolleys are three-wheeled types of trolleys having a single front wheel. A main reason for this is that a tripod architecture allows to prevent wobbling when set on uneven ground. However, in practice these types of trolleys which have a single front wheel turn out to be difficult to maneuver. For changing the direction, the front wheel with the heavy golf bag has to be lifted by pulling down a rear handle. On an 18-hole golf course where a game can take up to six hours (walking distance up to 10 km) this may lead to back, neck or shoulder pain which is affecting the performance of the golf sport itself. Mainly female players and older men are affected by this problem. These are also large groups of players that in many cases have problems to lift a golf bag onto a golf trolley to fix it. One conventional approach currently used to address this problem are push trolley comprising rotatable front wheels, the trolleys being guided by a rear handle. However, in order to change the driving direction of such trolleys, typically a significant force has to be applied to the rear handle. In addition, when leaving the flat terrain golf trolleys having two main back wheels and one front wheel tend to drift sideways when e.g. traversing on slopes. This in particular holds true for trolleys having rotatable front wheels. If such drifting occurs while using motorized/powered golf trolleys, over- and understeering may result making fast responding and skilful handling necessary. Consequently, motorized golf trolleys with rotatable front wheels could not be established in the market.

It is therefore one object of the present invention to provide a golf trolley, in particular a powered /motorized golf trolley, that combines a particularly good maneuverability with good direction stability as well as tilt stability when being used on uneven terrain. Hence, if compared to the systems known from the prior art a golf trolley according to the present invention is also suited for players who encounter above mentioned problems with conventional golf trolleys as it a has significantly improved ergonomics and easier operation.

In order to allow easy transport and storage of a golf trolley even in the trunk of a small car or a sports car a golf trolley should be collapsible such that it can be converted/transformed from a deployed, respectively operational state to a collapsed state. However, as mentioned above most conventional systems can either not be brought into a really small/compact configuration. Or they are relatively heavy which makes handling of them when in a collapsed state inconvenient. As well they may have to be disassembled into multiple independent smaller components, which entails the inherent danger of parts being lost.

Another problem known from conventional golf trolleys is that in order to attach a golf bag to the golf trolley, the golf bag first has to be lifted above the golf trolley, be manually positioned on the golf trolley and held in place before a proper mechanical interconnection can be established between the golf bag and the golf trolley. In particular, when using relatively heavy golf bags loaded with a lot of equipment, such type of mounting of a golf bag is highly undesirable from a biomechanical point of view.

Another disadvantage of many conventional powered golf trolleys is that their powertrain generates significant disturbing noise.

In order to solve at least one of the aforementioned problems, a golf trolley according to the present invention typically comprises a left front wheel that in an operational state of the golf trolley is arranged on a horizontal front axis. Within the context of the present invention an operational state is a state where the golf trolley is in a non-collapsed state respectively ready to be used on a golf course. The left wheel is driven by a left motor. The horizontal front axis constitutes a first horizontal plane as will be explained in more detail below. According to the present invention the golf trolley further comprises a right front wheel that in an operational state of the golf trolley is arranged on the front axis and is driven by a right motor. The golf trolley further comprises a rear wheel that in an operational state of the golf trolley is arranged a distance apart from the front axis. For certain applications also multiple rear wheels may be used.

The left and the right front wheels and the rear wheel constitute a forward driving direction of the golf trolley. The golf trolley further comprises a base structure that in an operational state of the golf trolley mechanically interconnects the left front wheel and the right front wheel and the rear wheel. In a variation of the invention, the base structure may comprise multiple rods arranged as a framework. According to the invention, the golf trolley further comprises a pillar that is attached to the base structure and configured to be interconnected with a golf bag to be conveyed by the golf trolley. Particularly good tilt stability may be obtained if the pillar is attached to the base structure in the vicinity of the front axis. According to the invention in an operational state of the golf trolley the pillar protrudes from the base structure in direction of the rear wheel by a tilt angle of between 35° and 85° (degrees) from the first horizontal plane. Particularly good results may be obtained using a tilt angle of between 50° and 70°, in particular of about 60°. Having the two driven wheels in front and the rear wheel in behind with respect to the forward driving direction turned out to increase the direction stability of a golf trolley on uneven terrain significantly. This in particular holds true for a variation of a golf trolley where the left and the right front wheels are driven by powertrains, respectively motors. Using such an arrangement also increases efficiency of an electronic stability control that may be implemented in a golf trolley to control traction of the front wheels and induce braking of one or both of the motors if needed. Such an arrangement also allows to solve a major problem known from most conventional golf trolleys: Most conventional golf trolleys have in common that the club heads (which constitute the major mass of a filled golf bag) are arranged at the back of the golf trolley and above the common axis of the two rear wheels. While ascending e.g. a hill, such conventional constructions tend to tilt backwards due to the mentioned mass distribution. While walking uphill with conventional golf trolleys user therefore always have to support the trolley by lifting the handle to avoid tilting. In particular, conventional motorized golf trolleys are prone to such tilting due to the torque applied to the rear wheel axes, which may even make usage of expensive tilt sensors necessary in order to prevent highly dynamic tilting that may be hazardous to health. Hence, using an arrangement according to the present invention such tilting modes can be efficiently prevented.

According to the invention a centrepiece is arranged at the base structure, interconnecting the base structure with the pillar. The front axis passes through the centrepiece. Particularly good results may be obtained if the pillar can be pivoted about a first fold axis arranged in parallel to the front axis, the first fold axis also passing through the centrepiece. The centrepiece may be an essentially integrally formed piece.

A variation of a golf trolley with particularly small collapsed dimensions can be obtained if the pillar can be pivoted about a first fold axis that is parallel to and a certain distance apart from the front axis. Good results may be obtained if in an operational state of the golf trolley the first fold axis is arranged vertically above the front axis.

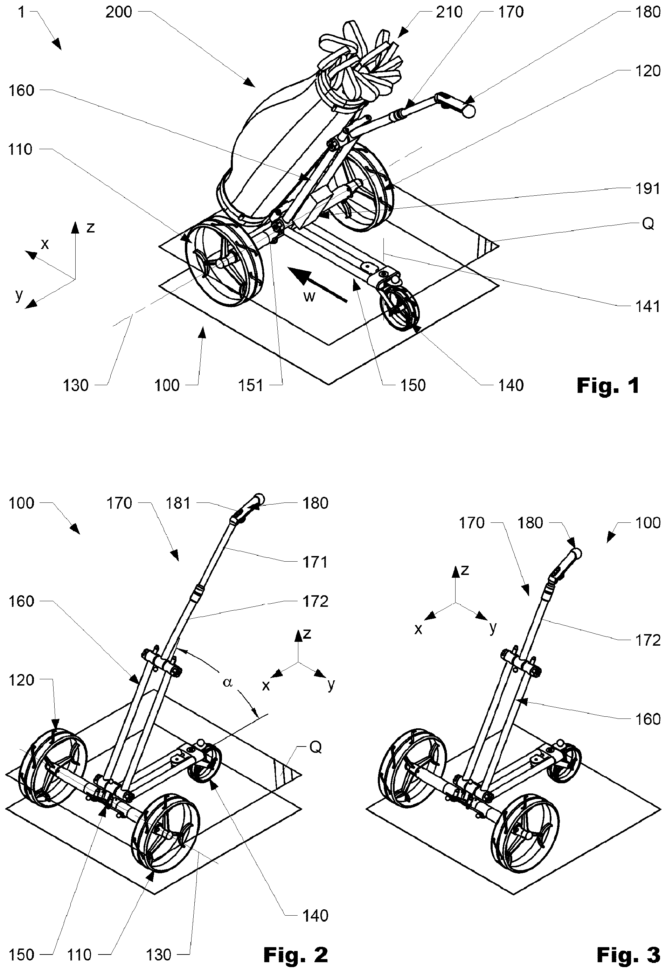

Good results may be obtained if the left and the right front wheel may be locked e.g. by the motor or a wheel locking mechanism. Thus, mounting of a golf bag may be simplified as will subsequently be explained with respect to Fig. 1 7A-C. According to a variation of the invention, a handle may be interconnected with the pillar in order to control driving of the golf trolley, e.g. torque of the left and/or the right motor. Therefore, a control interface may be arranged at the handle.

A very user friendly golf trolley may be obtained if the handle is interconnected with the pillar by an extension means. Good results may be obtained if the extension means can be pivoted with respect to the pillar, in particular about a second folding axis. Hence, height and position of the handle may be easily adjusted, respectively customized for a specific user.

Alternatively, or in addition, a handle may also be arranged at a separate steering column interconnected with the base structure.

A trolley that can be manoeuvred very easily can be obtained if the handle in an operational state is essentially positioned in a region vertically above the rear wheel. Thus, only very small forces have to be applied to the handle in order to steer/deflect the trolley. This in particular holds true if the rear wheel is pivotably attached to the base structure as will be explained in more detail below.

A particularly user-friendly golf trolley may be obtained if in an operational state of the golf trolley the handle in direction of the forward driving direction is located behind the rear wheel. Thus, using leverage particularly small forces have to be applied in order to steer the golf trolley.

According to a variation of the invention a first coupling means may be arranged at the pillar and configured to attach a golf bag such that the golf bag aligns with the pillar. Good results may be obtained if the golf bag in an aligned state is arranged essentially in parallel with the pillar, respectively has about the same tilt angle as the pillar. Particularly good results may be obtained if a golf bag is to be mounted at the side of the pillar directed to the forward driving direction.

According to a variation of the invention the base structure may comprise a front axle configured to interconnect the left front wheel with the right front wheel when the golf trolley is in an operational state. According to a preferred variation of the invention, the front axle is essentially straight. Good results may be obtained if the front axle is a multi-part axle. The front axle may be a tubular structure.

A variation of a golf trolley having a particularly small collapsed state may be obtained if the front axle comprises a left pivoting member being pivotable about a left pivot axis from an operational state to a collapsed state and a right pivoting member being pivotable about a right pivot axis from an operational state to a collapsed state.

A variation of a golf trolley that is particularly easy to handle when in a collapsed state as well as when in an operational state may be obtained if the left and the right pivot axes are spaced apart from each other by between 100 mm (millimetres) and 250 mm. This in particular holds true if motors are arranged in the left and the right pivoting members, as described herein. In one variation of the invention the left and the right pivot axes may be spaced apart from each other by about the width of the pillar in a transverse direction perpendicular to the forward driving direction.

A golf trolley having a particularly small collapsed shape may be obtained if the left and the right pivot axes are essentially perpendicular to the horizontal front axis plane.

A variation of a golf trolley having a particularly advantageous weight distribution leading to a high tilting stability in a transversal direction may be obtained if the left motor is arranged at the left pivot member and the right motor is arranged at the right pivot member. As well, such a variation comprises good cooling of the motors and other components of a powertrain if present.

A variation of a golf trolley which is a highly durable may be obtained if the left motor is arranged within the left pivot member and the right motor is arranged within the right pivot member. The left and the right pivot member therefore may comprise tubular structures.

According to a variation of the invention a left drivetrain may be arranged at the left pivoting member and a right drivetrain may be arranged at the right pivoting member.

A variation of a golf trolley which has a particularly small collapsed size can be obtained if the left front wheel can be disconnected from a left wheel hub arranged at the left pivoting member and the right front wheel can be disconnected from a right wheel hub arranged at the base structure. Alternatively, or in addition the left and the right front wheels may also be pivoted with respect to the left respectively the right pivoting members.

According to a variation of the invention pivoting of the left pivoting member may be restricted by a left locking member and pivoting of the right pivoting member may be restricted by the right locking member. Thus the pivoting members may be fixed in an operational state and/or be fixed in a collapsed state in order to ensure safe transport of the golf trolley.

According to a variation of the invention the rear wheel may be pivotably attached to the base structure such that the running direction of the rear wheel is rotatable about a steering axis. The steering axis will typically be essentially perpendicular to the horizontal front axis. In other words, the axis of rotation of the rear wheel may be pivotable relatively to the front axis, respectively the rear wheel may be pivotably attached to the base structure.

A golf trolley that has a particularly good direction stability even when used on uneven terrain may be obtained if the golf trolley comprises a rotation prevention means configured to at least temporarily restrain the rear wheel from rotating about the steering axis.

From conventional trolleys, temporary rigid/full fixations of front wheels e.g. using locking pins are known that may be manually activated for traversing a slope. However, these systems force a user to lift the fixed front wheel (together with the front of the trolley) as soon as a change of direction is needed (as described before), which makes such conventional trolleys highly unfavourable from a biomechanical (respectively ergonomic) point of view. Ergonomics can be improved using a variation of a trolley according to the invention where a rotation prevention means is configured such that the rear wheel can rotate about the steering axis if a predefined minimum threshold torque about the steering axis is applied to the rear wheel. Thus a golf trolley having a particularly good direction stability as well as manoeuvrability may be obtained. Such a variation of a trolley may e.g. advantageously be obtained using a magnetic arrangement, as will subsequently be explained.

For some applications the rear wheel may be held by a rear wheel mount that is pivotably attached to the base structure and a first restraint member arranged at the rear wheel mount and a complementary second restraint member arranged at the base structure, the first and the second restraint member being attracted to each other by a magnetic force and thereby aligning the rear wheel to a fixed running direction. Hence, e.g. the first restraint member and/or the second restraint member may e.g. comprise a magnet, respectively a ferro- or paramagnetic member.

For some applications, the second restraint member may be configured to be moved away from the first restraint member by an unlocking device in order to reduce the magnetic force and hence allow rotations of the rear wheel about the steering axis.

It is clear that within the context of the present invention, alternatively or in addition to permanent magnets also e.g. an electromagnetic arrangement may be applied. As such, e.g. a magnetic field could be generated by activating an electromagnetic second restraint member. This e.g. could be done automatically such as depending on the driving speed and/or slope of the terrain and/or based on positioning of the golf trolley (e.g. as provided by a GPS system). Alternatively, or in addition a magnetic field (respectively the rotation prevention means in general) may be activated e.g. manually by a user (e.g. by means of a control unit arranged at the handle).

According to a variation of the invention, the golf trolley may comprise an electrical interface arranged to be interconnected with a power supply device. Good results may be obtained if the electrical interface is arranged in the vicinity of the front axis. Particularly good results may be obtained if the golf trolley comprises a centrepiece as described herein and the electrical interface is arranged at the centrepiece as will be explained in more detail below. Alternatively, or in addition, the golf trolley may comprise an external power supply such as a battery pack which is electrically interconnected with the powertrain by means of a cable. The battery pack can be e.g. stored in the golf bag or a separate bag to be attached to the golf trolley.

According to a variation of the invention the pillar may comprise a first and a second rod arranged a distance apart from each other and the electrical interface being arranged between the first and the second rod, as will be shown in more detail below.

A coupling assembly according to the present invention for interconnecting a golf bag with a golf trolley typically comprises a first coupling means comprising a first connector means configured to be interconnected with a golf trolley and a second coupling means configured to be interconnected with a golf bag, while the first and the second coupling means being detachably interconnectable with each other.

According to a variation of the invention, the first coupling means may comprise an upper first coupling member and a lower first coupling member. The second coupling means may comprise an upper second coupling member to be interconnected with the upper first coupling member and a lower second coupling member to be interconnected with the lower first coupling member, the upper first coupling member and/or the lower first coupling member to be attached to the pillar of a golf trolley.

Alternatively, or in addition, the lower first coupling member may also be attached to the base structure as will be shown in more detail below. Good results may also be obtained if the lower first coupling member is arranged at a centrepiece which interconnects a front axle with the pillar. Good results may be obtained if the centrepiece is an integral part.

According to a variation of the invention, the second coupling means may be configured to be permanently interconnected with a golf bag. E.g. the second coupling means may be interconnected with a golf bag by means of a rivet or an adhesive or may also be integral part of a golf bag.

According to one variation of the present invention the second coupling means may be configured to be detachably interconnected with a golf bag.

Good results may be obtained if the upper second coupling member and/or the lower second coupling member comprises a strap arranged to be at least partially wound around the golf bag and thereby securing the golf bag as will be shown in more details below. Alternatively, or in addition a Velcro-type fastener and/or a magnet-type fastener may be used.

A particularly durable attachment of a golf bag to a trolley may be obtained if the lower second coupling member and/or the lower second coupling member comprises a support member, such that when attached to a golf bag the support member supports a bottom side of the golf bag. The support member may e.g. comprise a plate or rod.

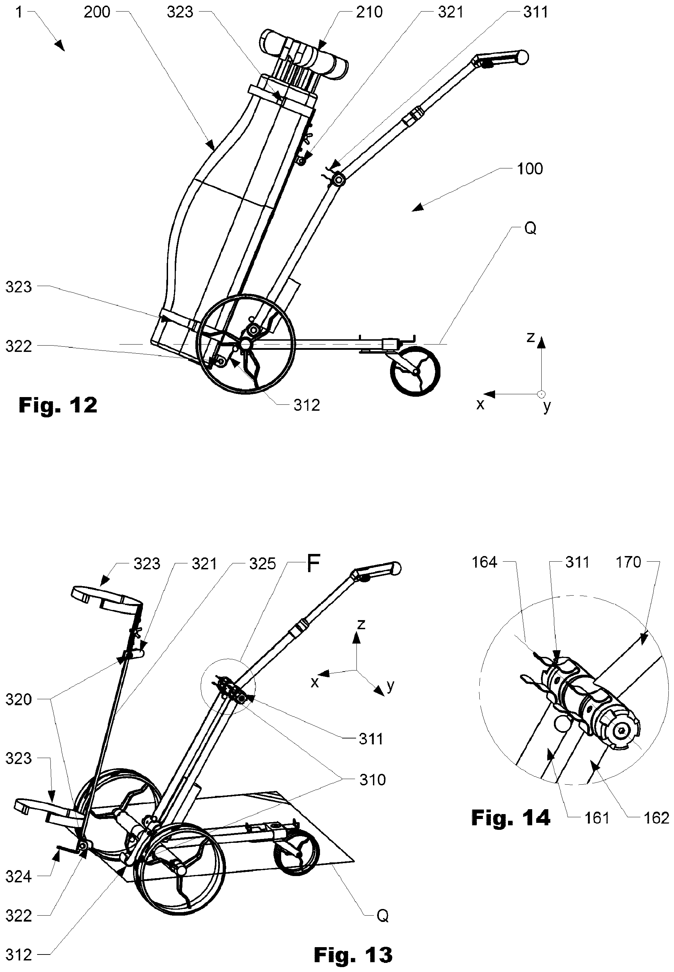

A coupling assembly that may be used for a variety of golf bags having differing lengths may be obtained if an upper second coupling member and a lower second coupling member are mechanically interconnected with each by an alignment means (e.g. a mechanical structure) that facilitates correct positioning of the upper second coupling member and a lower second coupling member relatively to each other even if not interconnected with a golf bag as will be explained in more detail below. An alignment means may e.g. be or may comprise a rod and/or a plate and/or a shell-like structure. Particularly good results may be obtained if the upper second coupling member and a lower second coupling member and the alignment means together constitute a kind of rigid framework that ensures a predefined positioning of upper second coupling member and a lower second coupling member relatively to each other. Hence, the upper second coupling member and a lower second coupling member may be arranged on a framework or may - in combination with e.g. at least one additional structural element (e.g. a rod) that extends between them and interconnects them - be part of a framework as will be shown in more detail to Fig. 13. Such a framework may be arranged on one side of a golf bag and may also at least partially encompass the golf bag to be attached to the golf trolley.

In a variation of the invention, the upper first coupling member and the upper second coupling member may be interconnectable by a snap fit connection and/or the lower first coupling member and the lower second coupling member may be interconnectable by a snap fit connection. As will be shown in more detail below. Thus a quick and easy interconnection between the first and the second coupling means can be obtained.

Alternatively, or in addition, the upper first coupling member and the upper second coupling member may be interconnectable by a magnetic connection and/or the lower first coupling member and the lower second coupling member may be interconnectable by a magnetic connection. Thus a particularly simple and quick interconnection between the first and the second coupling means may be obtained.

Alternatively, or in addition, the upper first coupling member and the upper second coupling member may be interconnectable by a hook-type connection and/or the lower first coupling member and the lower second coupling member may be interconnectable by a hook-type connection, as will be shown in more detail below. Thus a highly reliable interconnection between the first and second coupling means which can also withstand high loads can be obtained.

Particularly good results may be obtained if the lower first coupling member is arranged in the vicinity of the horizontal front axis - respectively a front axle if present - as shown in the subsequent figures. Thus, load of a golf bag can be transferred efficiently to the wheels, allowing to reduce load the pillar has to withstand significantly. Good results may be obtained if the lower first and second coupling members upper first and second coupling members are configured such that vertical loads (i.e. loads essentially perpendicular to the horizontal front axis plane) are mostly carried by the lower first and second coupling members whereas torque is mostly carried by the upper first and second coupling members. Therefore, the lower first and second coupling members may e.g. constitute a hook-type connection and the upper first and second coupling members may constitute a snap fit connection, as will be shown in more detail below.

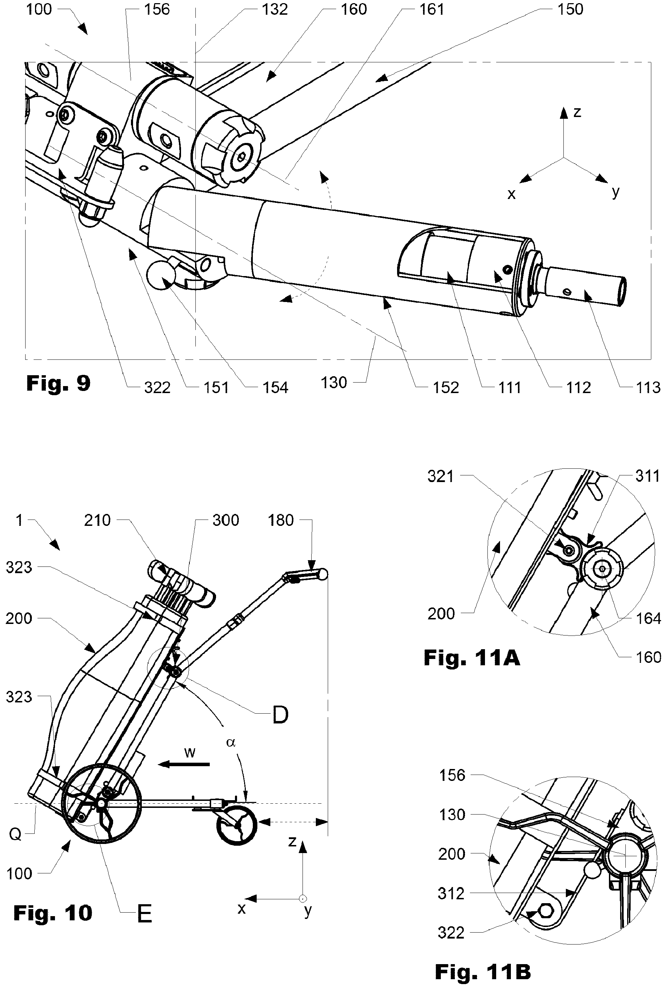

According to a variation of the invention, that has a particularly good tilt stability (in particular against lateral tilting) may be obtained if the first and the second coupling means are arranged such that when a golf bag is attached to the golf trolley, the lowest point of the golf bag is arranged in vertical direction close to the horizontal front axis plane. Particularly good results may be obtained if the lowest point of the golf bag is arranged in vertical direction on or below the horizontal front axis plane, as subsequently will be explained in more detail with respect to Figure 10. Thus, a low positioning of the centre of gravity of the bag can obtained, increasing tilting stability significantly if compared to conventional golf trolleys where such low positioning of a golf bag is not possible.

Alternatively, or in addition, the upper first coupling member and the upper second coupling member may be interconnectable by a socket-plug connection and/or the lower first coupling member and the lower second coupling member may be interconnectable by a socket-plug connection, as will also be explained in more detail below. Thus, a particularly rigid mechanical interconnection between the first and the second coupling means may be obtained.

According to a variation of the invention, the first coupling means may be configured to be permanently interconnected with a pillar of a golf trolley. Good results may be obtained if the first coupling means is an integral part of the pillar.

The present invention is also directed to providing a golf trolley assembly (respectively set or composition that comprises a golf trolley as described herein, and a coupling assembly as described herein.

According to a variation of the invention the golf trolley assembly may also comprise a golf bag interconnectable with the golf trolley by means of the coupling assembly.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description of the given herein below and the accompanying drawings, which should not be considered as limiting to the invention described in the appended claims.
- Fig. 1: schematically shows a variation of a golf trolley according to the present invention with a golf bag in a perspective view from above;
- Fig. 2: schematically shows a variation of a golf trolley in an operational state in a perspective view from above;
- Fig. 3: schematically shows the golf trolley of Fig. 2 with the extension means being in a partially collapsed configuration in a perspective view from above;
- Fig. 4: schematically shows the golf trolley of Fig. 2 with the extension means being in a fully collapsed configuration in a perspective view from above;
- Fig. 5: schematically shows the golf trolley of Fig. 2 with the pillar being in a collapsed configuration and the front wheels being disconnected from the base structure in a perspective view from above;
- Fig. 6: schematically shows the golf trolley of Fig. 2 with the left and right pivoting members being in a collapsed configuration in a perspective view from above;
- Fig. 7: schematically shows the golf trolley of Fig. 2 in a fully collapsed state in a perspective view;
- Fig. 8: schematically shows the golf trolley of Fig. 2 in a lateral view;
- Fig. 9: schematically shows part of a front axle of a variation of a trolley according to the invention in a perspective view from above;
- Fig. 10: schematically shows a variation of a golf trolley with an attached golf bag in a lateral view;
- Fig. 11A: schematically shows detail D of Fig. 10;
- Fig. 11B: schematically shows detail E of Fig. 10;
- Fig. 12: schematically shows a variation of a golf trolley with a partially attached golf bad in a lateral view;
- Fig. 13: schematically shows the golf trolley and golf bag of Fig. 12 the golf bag being removed from the golf trolley in a perspective view;
- Fig. 14: shows detail F of Fig. 13;
- Fig. 15: schematically shows a variation of a golf trolley and golf bag in a perspective view;
- Fig. 16A: schematically shows detail G of Fig. 15;
- Fig. 16B: schematically shows detail H of Fig. 15;
- Fig. 17A-17C: depict subsequent steps of attaching a golf bag to a golf trolley in a lateral view;
- Fig. 18: schematically shows a power supply device to be interconnected with a golf trolley in a perspective view;
- Fig. 19: schematically shows a variation of a rear wheel arrangement of a golf trolley in a perspective view.

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

**Fig. 1** schematically shows a variation of a golf trolley assembly 1 comprising a golf trolley 100 and a thereto attached golf bag 200 in an operational state. The trolley comprises a left front wheel 110 that is arranged on a horizontal front axis 130 and is driven by a left motor (not visible) arranged within the front axle 151. The horizontal front axis 130 constitutes a first horizontal plane Q which is essentially parallel to the ground on which the golf trolley 100 stands. The golf trolley 100 further comprises a right front wheel 120 that is also arranged on the front axis 130 and is driven by a right motor (not visible). A rear wheel 140 is arranged a distance apart from the front axis 130 and rotatable about a steering axis 141. The left and the right front wheel 110, 120 as well as the rear wheel 130 constitute a forward driving direction w of the golf trolley 100, as indicated by arrow w. The golf trolley 100 further comprises a base structure 150 that mechanically interconnects the left front wheel 110 and the right front wheel 120 and the rear wheel 130. The base structure 150 of the variation shown comprises a tubular framework which is lightweight and in addition facilitates collapsing (respectively folding) the golf trolley 100 in order to obtain a small configuration for transport and/or storage of the golf trolley 100. The golf trolley 100 further comprises a tubular pillar 160 that is mechanically interconnected with the base structure 150 in the vicinity of the front axis 130 and configured to be interconnected with the golf bag 200. The pillar 160 protrudes from the base structure 150 in direction of the rear wheel 140 by a tilt angle of about 60° from the first horizontal plane Q. Thus a particularly good tilt stability can be obtained.

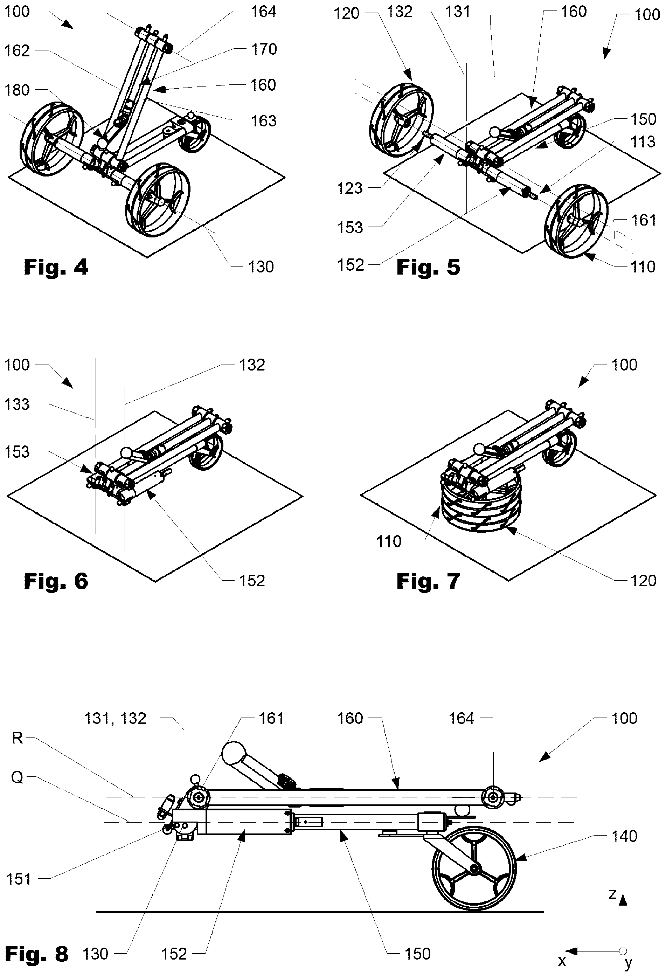

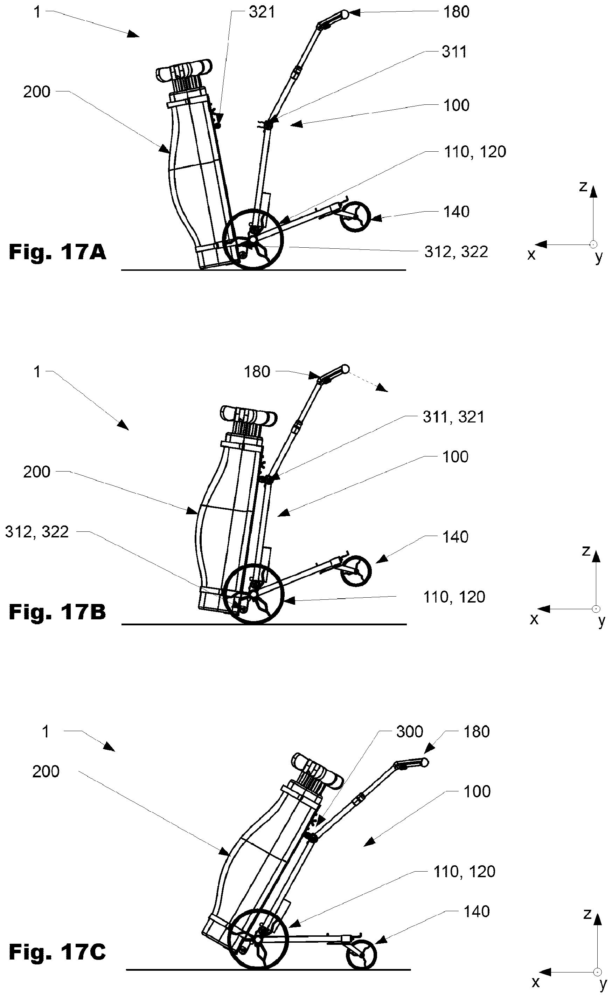

**Fig. 2** to **Fig. 7** schematically show a variation of a golf trolley 100 according to the invention which in subsequent steps is transformed from an operational state as shown in **Fig. 2** into a collapsed state as shown in **Fig. 7****.** The variation of a golf trolley 100 shown comprises a handle 180 which can be grabbed by a user in order to move the golf trolley 100 e.g. when walking a golf course or when attaching a golf bag to the golf trolley, as will subsequently be explained with respect to **Fig. 17A** to **17C****.** The handle comprises a control interface 181 which can be used to control the left and the right motor as well as it provides information regarding the status of a power supply pack (not shown). The handle 180 is interconnected with the pillar 160 by an extension means 170. The extension means 170 comprises a first and a second extension member 171, 172. The pillar 160 is mechanically interconnected with the base structure 150 in the vicinity of the front axis 130 and protruding from the base structure 150 in direction of the rear wheel 140 by a tilt angle α (alpha) of about 60° from the first horizontal plane Q. As shown in **Fig. 3****,** in order to transform the golf trolley 100 into a collapsed state, the length of the extension member 170 can be reduced by pushing the first extension member 171 into the second extension member 172 in an axial direction. In a subsequent step of transformation, the handle 180 and the extension means 170 and may be rotated about a second fold axis 164 arranged at the pillar 160 and being essentially parallel with respect to the front axis 130. Thus, the extension means 170 can be positioned between a first and a second rod 162, 163 of the pillar 160. In a subsequent step of transformation as depicted in **Fig. 5****,** the left and the right front wheel 110, 120 can be disconnected from a left wheel hub 113 arranged at a left pivoting member 152, respectively from a right wheel hub 123 arranged at a right pivoting member 153. As well, the pillar 160 can be rotated about a first fold axis 161 and thus be aligned with the base structure 150. In a subsequent step of transformation as shown in **Fig. 6****,** the left and the right pivoting members 152, 153 then can be rotated about a left, respectively a right pivot axis 132, 133 that are both essentially perpendicular to the horizontal front axis plane (not shown). Thus, the left and the right pivoting member 152, 153 can be aligned essentially in parallel to the first and the second rod 162, 163 making it possible to obtain a very compact collapsed shape, which is also illustrated in **Fig. 7** where the first and the second front wheel 110, 120 are aligned with the other parts of the collapsed golf trolley 100.

**Fig. 8** shows the collapsed golf trolley 100 of **Fig. 6** from the left side. As can be seen essentially all components of the golf trolley 100 are aligned in either the horizontal front axis plane Q or a storage plane R which is defined by the first fold axis 161 and being in parallel to the horizontal front axis plane Q.

As shown in **Fig. 9****,** a variation of a golf trolley 100 according to the present invention may comprise a mechanism to fold the front axle 151 in order to obtain a significantly compact collapsed configuration for transport and/or storage of the golf trolley 100. Therefore, the front axle 151 comprises a left pivoting member 152 that is pivotable about a left pivot axis 132 from an operational state to a collapsed state and vice versa (indicated by the dotted arrows). Pivoting of the left pivoting member 152 can be restricted by a left locking member 154. As schematically shown, the left pivoting member 152 comprises a tubular part in which a left motor 111 to drive a left wheel (not shown) is arranged. In the variation shown, the left motor 111 is interconnected to a left drivetrain 112 which is also partially arranged in the left pivoting member 152. The left drivetrain 112 shown comprises inter alia a gear to transmit power and motion from the left motor 111 to a left wheel hub 113 that is configured to receive a left front wheel 110 (not shown). Due to the arrangement of this powertrain in the left pivoting member 152 and close to the left front wheel efficiency of the powertrain can be maximised as well as sufficient cooling of the powertrain can be obtained. In addition, as the powertrain is arranged close to the left front wheel 120 vibrations that may be generated by the powertrain will be mostly absorbed by the wheel and be transmitted to the ground, hence efficiently be damped. As also depicted in **Fig. 9****,** a centrepiece 156 is arranged at the base structure 150 and interconnects the front axle 151 with the pillar 160. As can be seen, the front axis 130 passes through the centrepiece 156 as well as the first fold axis 161 arranged in parallel to the front axis 130 also passes through the centrepiece 156. The centrepiece 156 shown is an essentially integrally formed structure. In addition, a lower second coupling member is arranged at the centrepiece 156, as will be explained in more detail below.

**Fig. 10** to **Fig. 14** schematically show a golf trolley assembly 1 comprising a golf bag 200 to be attached to a golf trolley 100 by a first variation of a coupling assembly 300. In the variation of a golf trolley 100 shown, the handle 180 is in direction of the forward driving direction w located behind the rear wheel 140, as indicated by the dotted double arrow. Thus, moving of the golf trolley 100 - respectively the golf trolley assembly 1 - becomes highly convenient as well as a particularly high direction stability can be obtained also on uneven terrain. As e.g. shown in **Fig. 10** when attached to the golf trolley 100, the lowest point of the golf bag 200 is arranged in vertical direction below the horizontal front axis plane Q, which allows to have the centre of gravity of the golf bag 200 (and consequently also the centre of gravity of the whole golf trolley assembly 1) low and hence increase lateral tilt stability.

As shown in **Fig. 11A** to **Fig. 14****,** the variation of a coupling assembly 300 shown comprises an upper first coupling member 311 embodied like a clamp and a lower first coupling member 312 embodied like a hook. The upper first coupling member 311 and the lower first coupling member 312 constitute a first coupling means 310 that is permanently interconnected to the golf trolley 100. The golf trolley assembly 1 shown also comprises second coupling means 320 that is detachably interconnected with the golf bag 200. The second coupling means 320 comprises an upper second coupling member 321 to be interconnected with the upper first coupling member 311 and a lower second coupling member 322 to be interconnected with the lower first coupling member 312. As e.g. visible in **Fig. 11B**, the lower first coupling member 312 is arranged at a centrepiece 156 that is part of the base structure 150. The upper first coupling member 311 is attached to the pillar 160. As e.g. depicted in **Fig. 11A****,** and **Fig. 13****,** the upper second coupling 321 comprises a cylinder-like structure that can be inserted in the clamp of the upper first coupling means 311 in order to obtain a snap fit connection. The lower second coupling 322 comprises a cylinder-like structure that can be inserted into a hook-like structure of the lower first coupling means 312, as e.g. visible in **Fig. 11****B** and **Fig 13****.** As well, the second coupling means comprises a support member 324, that when attached to the golf bag 100 supports the bottom side of the golf bag 200. The upper second coupling member 321 and a lower second coupling member 322 are mechanically interconnected with each other by an alignment means 325 (e.g. a third rod) constituting a kind of rigid framework that ensures correct positioning of upper second coupling member 321 and a lower second coupling member 322 relatively to each other, which facilitates interconnecting the first and second coupling means 310, 320. As not every golf bag 100 has the same height such a construction allows to maintain a predefined distance between the lower second and the upper second coupling members 322, 321 which allows easy and quick attachment to the first and the second coupling members 310, 320. In other words, such a variation of the invention can easily be adapted to different golf bag lengths without interfering the distance of the coupling members. At the same time such an arrangement allows reliable and durable attachment of the second coupling means 320 to the golf bag 200. Using such a variation of a coupling assembly 300 allows very convenient attachment of a golf bag 200 to a golf trolley 100 having a good structural competence.

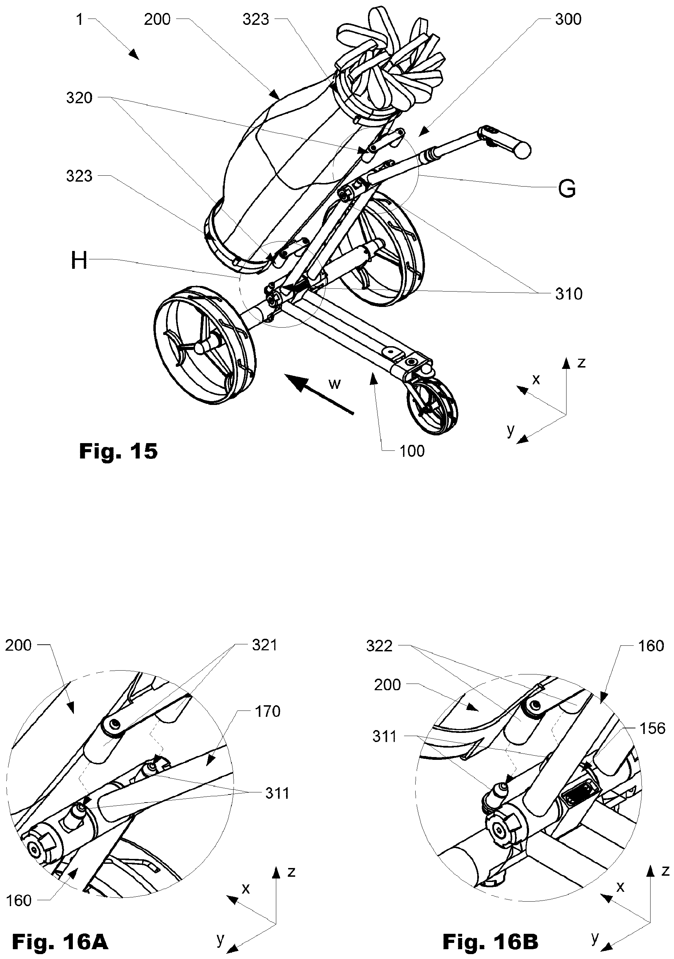

**Fig. 15, Fig. 16A** and **Fig 16B** show another variation of a coupling assembly 300 according to the present invention. The coupling assembly 300 has a first coupling means 310 again comprising an upper first coupling member 311 and a lower first coupling member 312 which both have two plug-like structures. The lower first coupling member 312 is again arranged at a centrepiece 156 of the base structure 150 as described above. The upper first coupling member 311 is arranged at the pillar 160 and is an integral part of the pillar 160. The coupling assembly 300 furthermore has a second coupling means 320 comprising an upper second coupling member 321 and a lower second coupling member 322 which both have two socket-like structures that are complementary to the plug-like structures of the first coupling means 310. The upper second coupling member 321 and the lower second coupling member 322 are both detachably interconnected with the golf bag by means of straps 323. As schematically illustrated in **Fig. 16A** and **Fig. 16B** a mechanical connection between the first and the second coupling means 310, 320 can be established by inserting the plug-like structures of the upper and lower first coupling members 311, 312 into the socket-like structures of the upper and lower second coupling members 321, 322 as schematically illustrated by the dotted arrows. Hence, a socket-plug connection, respectively a kind of hook-type connection can be established.

**Fig. 17A-C** schematically illustrate in subsequent steps how a golf bag 200 can be interconnected with at golf trolley 100 using the present invention. As shown in **Fig. 17A** in a first step the golf bag 200 which may have a relatively high mass when fully loaded with clubs and other equipment can be positioned on the ground in a somehow upright position. The golf trolley 100 then can be positioned adjacent to the golf bag 200 and be tilted in forward direction about the left and right front wheels 110, 120 such that the lower first and second coupling members 312, 322 can be brought into mechanical connection with each other. In order to facilitate tilting of the trolley the left and the right front wheel can be locked by temporarily locking the left and the right powertrain. In order to allow such an initial connection, the golf bag 200 may be slightly tilted (as shown) or be slightly lifted. As soon as such initial connection is established, the upper first and second coupling members 311, 321 typically can be interconnected without much effort, as schematically shown in **Fig. 17B****.** Therefore, the golf bag 200 only has to be rotated/tilted backwards and about the lower first and second coupling members 312, 322 which in the variation shown are embodied as shown in **Figs. 10** to **13** and hence allow such rotations. It is clear that within the context of the invention alternatively also first upper first and second coupling members 311, 321 may be interconnected. In a subsequent step, shown in **Fig. 17C****,** the whole golf trolley assembly 1 comprising the golf trolley 100 thereto attached golf bag 200 can easily be brought into an operational position by applying a force to the handle 180 as indicated by the dotted arrow. Hence a golf trolley assembly 1 is ergonomically highly advantageous.

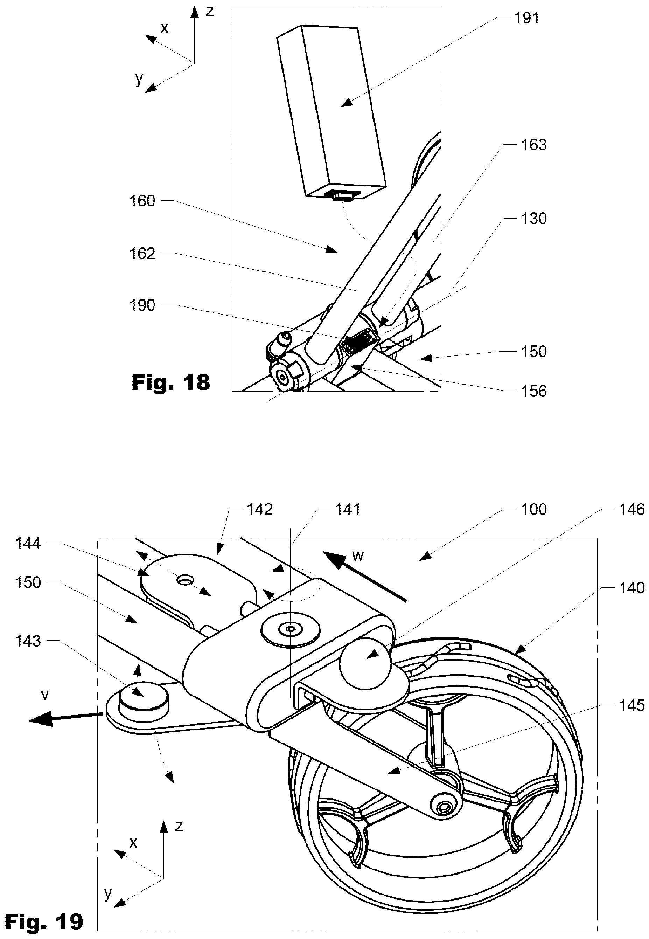

**Fig. 18** schematically shows another aspect of the present invention, according to which a variation of a golf trolley 100 may comprise an electrical interface 190 arranged to be interconnected with a power supply device 191. In the embodiment shown the electrical interface 190 is arranged in the front axis 130, in particular it is arranged at a centerpiece 156 of the base structure. Good results may be obtained if the power supply device 191 (e.g. a battery) is interconnected directly with the electrical interface 190, hence if no connecting means like cables are used. Thus, establishing an electrical connection between the golf trolley 100 and the power supply device becomes very convenient. In addition, by this the typically relatively high mass of the power supply device is allocated close to the front axis 130 which hence does not have a significant effect on the process of interconnecting a golf bag 200 with a golf trolley 100 as shown in **Figs. 17A-C**. Particularly good results may be obtained if the pillar 160 comprises a first and a second rod 162, 163 arranged a distance apart from each other as shown in **Fig. 18** and the electrical interface 190 being arranged between the first and the second rod 162, 163. Thus, a power supply device 191 may be arranged between the first and the second rod 162, 163. This allows to obtain a golf trolley 100 having a particularly compact design and also easy fixation of the power supply device 191 to the first and/or the second rod 162, 163.

**Fig. 19** illustrates a variation of the invention where the rear wheel 140 is held by a rear wheel mount 145 that is pivotably attached to the base structure 150. The wheel mount 145 (respectively the rear wheel 140) can be rotated about a steering axis 141 (indicated by the dotted arrows) in order to increase manoeuvrability of the golf trolley 100. The arrangement shown comprises a rotation prevention means 142 having a first magnetic restraint member 143 that is arranged at the rear wheel mount 145. A complementary second ferromagnetic restraint member 144 is arranged at the base structure 150. The first and the second restraint members 143, 144 are attracted to each other by the magnetic force interacting between them. Hence, when the rear wheel 140 is oriented such that its running direction v is essentially in parallel to the forward driving direction w of the golf trolley 100, the magnetic force will align the rear wheel mount 143 to a fixed running direction w. Hence when traversing on slopes the golf trolley 100 will not tend to turn uphill. However, rotations about the steering axis 141 may still be possible in case a predefined minimum threshold torque about the steering axis 141 is applied to the rear wheel mount 145. The variation of a golf trolley 100 shown further comprises an unlocking device 146 configured to move the second restraint member 144 away from the first restraint member 143 in order to reduce the magnetic force and hence allow free rotations of the rear wheel 140 about the steering axis 141.

Rather, the words used in the specification are words of description rather than limitation, and it is understood that various changes may be made without departing from the scope of the invention.

### REFERENCE NUMERALS

- 1: Golf trolley assembly
- 100: Golf trolley
- 110: Left front wheel
- 111: Left motor
- 112: Left drivetrain
- 113: Left wheel hub
- 120: Right front wheel
- 121: Right motor
- 122: Right drivetrain
- 123: Right wheel hub
- 130: Front axis
- 132: Left pivot axis
- 133: Right pivot axis
- 140: Rear wheel
- 141: Steering axis
- 142: Rotation prevention means
- 143: First restraint member
- 144: Second restraint member
- 145: Rear wheel mount
- 146: Unlocking device
- 150: Base structure
- 151: Front axle
- 152: Left pivoting member
- 153: Right pivoting member
- 154: Left locking member
- 156: Centrepiece
- 160: Pillar
- 161: First fold axis
- 162: First rod
- 163: Second rod
- 164: Second fold axis
- 170: Extension means
- 171: First extension member
- 172: Second extension member
- 180: Handle
- 181: Control interface
- 190: Electrical interface
- 191: Power supply device (e.g. battery pack)
- 200: Golf bag
- 201: Bottom side
- 210: Golf clubs
- 300: Coupling assembly
- 310: First coupling means
- 311: Upper first coupling member
- 312: Lower first coupling member
- 320: Second coupling means
- 321: Upper second coupling member
- 322: Lower second coupling member
- 323: Strap
- 324: Support member
- 325: Alignment means (third rod)
- Q: Horizontal front axis plane
- R: Storage plane
- α: Tilt angle
- w: Forward driving direction
- v: Running direction of the rear wheel

## Claims

1. A golf trolley (100) for carrying of a golf bag (200), in an operational state of the golf trolley (100) comprising
a. a left front wheel (110) being arranged on a horizontal front axis (130) and driven by a left motor (111); and
b. the horizontal front axis (130) constituting a first horizontal plane (Q); and
c. a right front wheel (120) being arranged on the front axis (130) and driven by a right motor (121); and
d. a rear wheel (140) being arranged a distance apart from the front axis (130)
e. the left and the right front wheel (110, 120) and the rear wheel (130) constituting a forward driving direction (w) of the golf trolley (100); and
f. a base structure (150) mechanically interconnecting the left front wheel (110) and the right front wheel (120) and the rear wheel (130); and
g. a pillar (160) attached to the base structure (150) and configured to be interconnected with a golf bag (200) to be conveyed by the golf trolley (100), the pillar (160) protruding from the base structure (150) in direction of the rear wheel (140) by a tilt angle (α) of between 35° and 85° from the first horizontal plane (Q), wherein the pillar (160) can be pivoted about a first fold axis (161), the first fold axis (161) being parallel to the front axis (130), and
h. a centrepiece (156) arranged at the base structure (150) interconnecting the base structure (150) with the pillar (160), wherein the front axis (130) and the first fold axis (161) passing through the centrepiece (156).

2. The golf trolley (100) according to claim 1, **wherein** the first fold axis (161) is arranged at a certain distance apart from the front axis (130).

3. The golf trolley (100) according to claim 1 or 2, **wherein** in an operational state of the golf trolley (100) the first fold axis (161) is arranged vertically above the front axis (130).

4. The golf trolley (100) according to any of the preceding claims, **wherein** a first coupling means (310) is arranged at the pillar (160) configured to attach a golf bag (200) such that the golf bag aligns with the pillar (160).

5. The golf trolley (100) according to any of the preceding claims, **wherein** the base structure (150) comprises a front axle (151) configured to interconnect the left front wheel (110) with the right front wheel (130) when the golf trolley (100) is in an operational state.

6. The golf trolley (100) according to claim 5, **wherein** the front axle (151) comprises a left pivoting member (152) being pivotable about a left pivot axis (132) from an operational state to a collapsed state and a right pivoting member (153) being pivotable about a right pivot axis (133) from an operational state to a collapsed state.

7. The golf trolley (100) according to claim 6, **wherein** the left motor (111) is arranged at the left pivot member (152) and the right motor (112) is arranged at the right pivot member (153), wherein the left motor (111) is arranged within the left pivot member (152) and the right motor (121) is arranged within the right pivot member (153).

8. The golf trolley (100) according to any of the preceding claims, **wherein** the left front wheel (110) can be disconnected from a left wheel hub (113) arranged at the left pivoting member (152) and the right front wheel (120) can be disconnected from a right wheel hub (123) arranged at the base structure (150).

9. The golf trolley (100) according to any of claims 6 to 8, **wherein** pivoting of the left pivoting member (152) can be restricted by a left locking member (154) and pivoting of the right pivoting member (153) can be restricted by the right locking member (155).

10. The golf trolley (100) according to claim 1, **wherein** the rear wheel (140) is pivotably attached to the base structure (150) such that the running direction (w) of the rear wheel (140) is rotatable about a steering axis (141), **wherein** the golf trolley (100) comprises a rotation prevention means (142) configured to restrain the rear wheel (140) at least temporarily from rotating about the steering axis (141).

11. The golf trolley (100) according to any of the preceding claims, **wherein** the rear wheel (140) is held by a rear wheel mount (145) that is pivotably attached to the base structure (150) and a first restraint member (143) arranged at the rear wheel mount (145) and a complementary second restraint member (144) arranged at the base structure (150), the first and the second restraint members (143, 144) being attracted to each other by a magnetic force and thereby aligning the rear wheel (140) to a fixed running direction.

12. The golf trolley (100) according to claim 11, **wherein** the second restraint member (144) can be moved away from the first restraint member (143) by an unlocking device (146) in order to reduce the magnetic force and hence allow rotations of the rear wheel (140) about the steering axis (141).

13. The golf trolley (100) according to any of the preceding claims, **wherein** the golf trolley (100) comprises an electrical interface (190) arranged to be interconnected with a power supply device (191), wherein the pillar (160) comprises a first and a second rod (162, 163) arranged a distance apart from each other and the electrical interface (190) being arranged between the first and the second rod (162, 163).

## Patentansprüche

1. Golfwagen (100) zum Tragen einer Golftasche (200), der in einem Betriebszustand des Golfwagens (100) Folgendes umfasst
a. ein linkes Vorderrad (110), das auf einer horizontalen Vorderachse (130) angeordnet ist und von einem linken Motor (111) angetrieben wird; und
b. wobei die horizontale Vorderachse (130) eine erste horizontale Ebene (Q) bildet; und
c. ein rechtes Vorderrad (120), das auf der Vorderachse (130) angeordnet ist und von einem rechten Motor (121) angetrieben wird, und
d. ein Hinterrad (140), das in einem Abstand von der Vorderachse (130) angeordnet ist
e. wobei das linke und das rechte Vorderrad (110, 120) und das Hinterrad (130) eine Vorwärtsfahrtrichtung (w) des Golfwagens (100) festlegen; und
f. eine Bodenstruktur (150), die das linke Vorderrad (110) und das rechte Vorderrad (120) und das Hinterrad (130) mechanisch wirkverbindet; und
g. eine an der Bodenstruktur (150) befestigte Säule (160), die so konfiguriert ist, dass sie mit einer durch den Golfwagen (100) zu transportierenden Golftasche (200) wirkverbunden ist, wobei die Säule (160) von der Bodenstruktur (150) in Richtung des Hinterrades (140) um einen Neigungswinkel (α) zwischen 35° und 85° von der ersten horizontalen Ebene (Q) hinausragt, wobei die Säule (160) um eine erste Klappachse (161) schwenkbar ist, wobei die erste Klappachse (161) parallel zur Vorderachse (130) ist, und
h. ein an der Bodenstruktur (150) angeordnetes Mittelteil (156), das die Bodenstruktur (150) mit der Säule (160) wirkverbindet, wobei die Vorderachse (130) und die erste Klappachse (161) durch das Mittelteil (156) verlaufen.

2. Der Golfwagen (100) gemäß Anspruch 1, wobei die erste Klappachse (161) in einem bestimmten Abstand von der Vorderachse (130) angeordnet ist.

3. Der Golfwagen (100) gemäß Anspruch 1 oder 2, wobei in einem Betriebszustand des Golfwagens (100) die erste Klappachse (161) senkrecht über der Vorderachse (130) angeordnet ist.

4. Der Golfwagen (100) gemäß einem der vorhergehenden Ansprüche, wobei ein erstes Kopplungsmittel (310) an der Säule (160) angeordnet ist, das konfiguriert ist, um eine Golftasche (200) so zu befestigen, dass die Golftasche mit der Säule (160) ausgerichtet ist.

5. Der Golfwagen (100) gemäß einem der vorangehenden Ansprüche, wobei die Bodenstruktur (150) eine Vorderachse (151) umfasst, die so konfiguriert ist, dass sie das linke Vorderrad (110) mit dem rechten Vorderrad (130) wirkverbindet, wenn sich der Golfwagen (100) in einem Betriebszustand befindet.

6. Der Golfwagen (100) gemäß Anspruch 5, wobei die Vorderachse (151) ein linkes Schwenkelement (152) umfasst, das um eine linke Schwenkachse (132) von einem Betriebszustand in einen eingeklappten Zustand schwenkbar ist, und ein rechtes Schwenkelement (153), das um eine rechte Schwenkachse (133) von einem Betriebszustand in einen eingeklappten Zustand schwenkbar ist.

7. Der Golfwagen (100) gemäß Anspruch 6, wobei der linke Motor (111) an dem linken Schwenkelement (152) und der rechte Motor (112) an dem rechten Schwenkelement (153) angeordnet ist, wobei der linke Motor (111) innerhalb des linken Schwenkelements (152) und der rechte Motor (121) innerhalb des rechten Schwenkelements (153) angeordnet ist.

8. Der Golfwagen (100) gemäß einem der vorhergehenden Ansprüche, wobei das linke Vorderrad (110) von einer am linken Schwenkelement (152) angeordneten linken Radnabe (113) und das rechte Vorderrad (120) von einer an der Bodenstruktur (150) angeordneten rechten Radnabe (123) abkoppelbar ist.

9. Der Golfwagen (100) gemäß Ansprüche 6 bis 8, wobei das Schwenken des linken Schwenkelements (152) durch ein linkes Verriegelungselement (154) und das Schwenken des rechten Schwenkelements (153) durch das rechte Verriegelungselement (155) begrenzt werden kann.

10. Der Golfwagen (100) gemäß Anspruch 1, wobei das Hinterrad (140) schwenkbar an der Bodenstruktur (150) befestigt ist, so dass die Laufrichtung (w) des Hinterrads (140) um eine Lenkachse (141) drehbar ist, wobei der Golfwagen (100) eine Rotationsverhinderungseinrichtung (142) umfasst, die so konfiguriert ist, dass sie das Hinterrad (140) zumindest vorübergehend an einer Drehung um die Lenkachse (141) hindert.

11. Der Golfwagen (100) gemäß einem der vorhergehenden Ansprüche, wobei das Hinterrad (140) durch eine Hinterradhalterung (145), die schwenkbar an der Bodenstruktur (150) angebracht ist, und ein erstes Rückhalteelement (143), das an der Hinterradhalterung (145) angeordnet ist, und ein komplementäres zweites Rückhalteelement (144), das an der Bodenstruktur (150) angeordnet ist, gehalten wird, wobei das erste und das zweite Rückhalteelement (143, 144) durch eine magnetische Kraft zueinander hingezogen werden und dadurch das Hinterrad (140) auf eine feste Laufrichtung ausrichten.

12. Der Golfwagen (100) gemäß Anspruch 11, wobei das zweite Rückhalteelement (144) durch eine Entriegelungsvorrichtung (146) von dem ersten Rückhalteelement (143) wegbewegt werden kann, um die Magnetkraft zu verringern und somit Drehungen des Hinterrades (140) um die Lenkachse (141) zu ermöglichen.

13. Der Golfwagen (100) gemäß einem der vorhergehenden Ansprüche, wobei der Golfwagen (100) eine elektrische Schnittstelle (190) umfasst, die angeordnet ist, um mit einer Stromversorgungsvorrichtung (191) wirkverbunden zu sein, wobei die Säule (160) eine erste und eine zweite Stange (162, 163) umfasst, die in einem Abstand voneinander angeordnet sind, und die elektrische Schnittstelle (190) zwischen der ersten und der zweiten Stange (162, 163) angeordnet ist.

## Revendications

1. Un chariot de golf (100) pour le transport d'un sac de golf (200), dans un état opérationnel du chariot de golf (100) comprenant
a. une roue avant gauche (110) arrangée sur un axe avant horizontal (130) et transmise par un moteur gauche (111) ; et
b. l'axe avant horizontal (130) constituant un premier plan horizontal (Q) ; et
c. une roue avant droite (120) arrangée sur l'axe avant (130) et transmise par un moteur droit (121) ; et
d. une roue arrière (140) arrangée à une certaine distance de l'axe avant (130)
e. les roues avant gauche et droite (110, 120) et la roue arrière (130) constituent une transmission vers l'avant (w) du chariot de golf (100) ; et
f. une structure de base (150) interconnectant mécaniquement la roue avant gauche (110) et la roue avant droite (120) et la roue arrière (130) ; et
g. un pilier (160) fixé à la structure de base (150) et configuré pour être interconnecté avec un sac de golf (200) devant être transporté par le chariot de golf (100), le pilier (160) faisant saillie de la structure de base (150) en direction de la roue arrière (140) selon un angle d'inclinaison (α) compris entre 35° et 85° par rapport au premier plan horizontal (Q), dans lequel le pilier (160) peut être pivoté autour d'un premier axe de pliage (161), le premier axe de pliage (161) étant parallèle à l'axe avant (130), et
h. une pièce centrale (156) arrangée à la structure de base (150) interconnectant la structure de base (150) avec le pilier (160), dans laquelle l'axe avant (130) et le premier axe de pliage (161) passent par la pièce centrale (156).

2. Le chariot de golf (100) selon la revendication 1, dans lequel le premier axe de pliage (161) est arrangé à une certaine distance de l'axe avant (130).

3. Le chariot de golf (100) selon la revendication 1 ou 2, dans lequel, dans un état opérationnel du chariot de golf (100), le premier axe de pliage (161) est arrangé verticalement au-dessus de l'axe avant (130).

4. Le chariot de golf (100) selon les revendications précédentes, dans lequel un premier moyen d'accouplement (310) est arrangé au niveau du pilier (160) configuré pour fixer un sac de golf (200) de sorte que le sac de golf s'aligne avec le pilier (160).

5. Le chariot de golf (100) selon les revendications précédentes, dans lequel la structure de base (150) comprend un essieu avant (151) configuré pour interconnecter la roue avant gauche (110) avec la roue avant droite (130) lorsque le chariot de golf (100) est dans un état opérationnel.

6. Le chariot de golf (100) selon la revendication 5, dans lequel l'essieu avant (151) comprend un élément pivotant gauche (152) pouvant pivoter autour d'un axe pivotant gauche (132) d'un état opérationnel à un état affaissé et un élément pivotant droit (153) pouvant pivoter autour d'un axe pivotant droit (133) d'un état opérationnel à un état affaissé.

7. Le chariot de golf (100) selon la revendication 6, dans lequel le moteur gauche (111) est arrangé au niveau de l'élément pivotant gauche (152) et le moteur droit (112) est arrangé au niveau de l'élément pivotant droit (153), le moteur gauche (111) étant arrangé à l'intérieur de l'élément pivotant gauche (152) et le moteur droit (121) étant arrangé à l'intérieur de l'élément pivotant droit (1 53).

8. Le chariot de golf (100) selon les revendications précédentes, dans lequel la roue avant gauche (110) peut être désolidarisée d'un moyeu de roue gauche (113) arrangé au niveau de l'élément pivotant gauche (152) et la roue avant droite (120) peut être désolidarisée d'un moyeu de roue droite (123) arrangé au niveau de la structure de base (150).

9. Le chariot de golf (100) selon les revendications 6 à 8, dans lequel le pivotement de l'élément pivotant gauche (152) peut être limité par un élément de verrouillage gauche (154) et le pivotement de l'élément pivotant droit (153) peut être limité par l'élément de verrouillage droit (155).

10. Le chariot de golf (100) selon la revendication 1, dans lequel la roue arrière (140) est fixée de manière pivotante à la structure de base (150) de sorte que la direction de marche (w) de la roue arrière (140) est rotative autour d'un axe de direction (141), dans lequel le chariot de golf (100) comprend un moyen de prévention de la rotation (142) configuré pour retenir la roue arrière (140) au moins temporairement de tourner autour de l'axe de direction (141).

11. Le chariot de golf (100) selon les revendications précédentes, dans lequel la roue arrière (140) est maintenue par un support de roue arrière (145) qui est fixé de manière pivotante à la structure de base (150) et un premier élément de retenue (143) disposé au niveau du support de roue arrière (145) et un deuxième élément de retenue (144) complémentaire disposé au niveau de la structure de base (150), le premier et le deuxième élément de retenue (143, 144) étant attirés l'un vers l'autre par une force magnétique et alignant ainsi la roue arrière (140) sur une direction de marche fixe.

12. Le chariot de golf (100) selon la revendication 11, dans lequel le deuxième élément de retenue (144) peut être éloigné du premier élément de retenue (143) par un dispositif de déverrouillage (146) afin de réduire la force magnétique et donc de permettre des rotations de la roue arrière (140) autour de l'axe de direction (141).

13. Chariot de golf (100) selon les revendications précédentes, dans lequel le chariot de golf (100) comprend une interface électrique (190) conçue pour être interconnectée avec un dispositif d'alimentation électrique (191), selon lequel le pilier (160) comprend une première et une deuxième tige (162, 163) disposées à une certaine distance l'une de l'autre et l'interface électrique (190) étant arrangée entre la première et la deuxième tige (162, 163).
